# EUROPÄISCHE PATENTSCHRIFT

(11) **EP 4 161 677 B1**
(45) Veröffentlichungstag und Bekanntmachung des Hinweises auf die Patenterteilung: **17.04.2024**
(21) Anmeldenummer: 21729507.0
(22) Anmeldetag: 28.05.2021
(51) Int. Cl.: B01D 29/13, B01D 29/88, B01D 29/21, B01D 29/90, B01D 29/92, B01D 29/96, B01D 35/147, B01D 35/153, B01D 35/16

(54) **FILTERVORRICHTUNG**
FILTER APPARATUS
APPAREIL DE FILTRATION

(30) Priorität: 24.07.2020 DE 102020004489
(43) Veröffentlichungstag der Anmeldung: 12.04.2023
(73) Patentinhaber: Hydac Filtertechnik GmbH, 66280 Sulzbach/Saar (DE)
(72) Erfinder: SAKRASCHINSKY, Michael, 66386 St. Ingbert (DE); RÖDER, Dirk, 66123 Saarbrücken (DE); BRAUNE, Martin, 66130 Brebach-Fechingen (DE)
(74) Vertreter: Bartels und Partner, Patentanwälte
(86) Internationale Anmeldenummer: PCT/EP2021/064343
(87) Internationale Veröffentlichungsnummer: WO 2022/017669

(56) Entgegenhaltungen:
- EP-A1- 1 870 152
- DE-A1-102009 042 143
- IT-A1- MI20 111 315
- JP-U- H02 125 715
- US-A- 4 731 183
- US-A1- 2015 209 711

## Beschreibung

Die Erfindung betrifft eine Filtervorrichtung mit den Merkmalen im Oberbegriff von Anspruch 1.

Durch die nachveröffentlichte DE 10 2019 008 741 ist eine gattungsgemäße Filtervorrichtung bekannt mit einem Filtergehäuse, das gleichfalls eine Anschlussstelle für die Zufuhr eines Unfiltratstroms und eine weitere Anschlussstelle für die Abfuhr eines Filtratstroms aufweist, mit einem ein Filtermaterial aufweisenden, hohlzylindrischen Filterelement, das zur Filtration des Unfiltratstroms zwischen die jeweiligen Anschlussstellen geschaltet ist, und mit einer Strömungseinleiteinrichtung für das Führen des Unfiltratstroms innerhalb des Filtergehäuses, die gleichermaßen auch dem Führen des Filtratstroms im Filtergehäuse dient und eine Trennwand aufweist, die mit ihren einander gegenüberliegenden Wandseiten unter Anströmung derselben dahingehend einmal den Unfiltrat- und einmal den Filtratstrom getrennt voneinander führt, und die von einem Fluidkanal durchgriffen ist, der endseitig einmal in das Innere des Filterelementes und einmal in Richtung einer der beiden Anschlussstellen ausmündet.

Dergestalt kann auf kompliziert zu verwirklichende, bogenförmig verlaufende Fluidkanäle im Filterkopf des Filtergehäuses verzichtet und diese durch Kanäle in geradlinig verlaufender Bauweise ersetzt werden, was Druckverluste beim Zu- und Abführen des Unfiltrat- bzw. des Filtratstroms durch Turbulenz sowie damit einhergehende das Material schädigende Kavitationserscheinungen vermeiden hilft und einen energetisch günstigen Filtrationsbetrieb im Rahmen der Partikelabreinigung mittels des Filterelementes ermöglicht.

Die US 4 731 183 beschreibt eine Filtervorrichtung mit den Merkmalen im Oberbegriff von Anspruch 1 mit einem Filtergehäuse, das mindestens zwei Anschlussstellen, wie einen Zulauf für Unfiltrat und einen Ablauf für Filtrat, aufweist sowie ein tauschbares Filterelement aufnimmt, wobei mittels einer Absperreinrichtung eine in einer Öffnungsstellung vorhandene fluidführende Verbindung zwischen Zu- und Ablauf in einer Sperrstellung abgesperrt ist und wobei mittels einer Ansteuereinrichtung die Absperreinrichtung in diese einzelnen Stellungen bringbar ist.

Weitere Filtervorrichtungen gehen aus der IT MI20111315 A1, der JP H02-125715 U, der EP 1 870 152 A1, der DE 10 2009 042 143 A1 und der US 2015/0209711 A1 hervor.

Ausgehend von diesem Stand der Technik liegt der Erfindung die Aufgabe zugrunde, diese bekannten Lösungen unter Beibehalten ihrer Vorteile dahingehend weiter zu verbessern, dass in besonderer Weise ein servicefreundlicher Filterelementwechsel erreicht ist.

Eine dahingehende Aufgabe löst eine Filtervorrichtung mit den Merkmalen des Patentanspruches 1 in seiner Gesamtheit.

Gemäß dem Kennzeichen von Anspruch 1 ist vorgesehen, dass die Absperreinrichtung eine zur Längsausrichtung des Filtergehäuses gesehen schräg gestellte Trennwand aufweist, die in der Öffnungsstellung mit ihrer Oberseite in die eine Anschlussstelle und mit ihrer Unterseite in die jeweils andere Anschlussstelle ausmündet; und dass die Trennwand mittels der Ansteuereinrichtung in die Sperrstellung gebracht, mittels mindestens eines Sperrelementes zumindest den Zulauf sperrt. Dadurch, dass der Zulauf gesperrt ist, ist das Innere des Filtergehäuses von nachströmendem Fluid auf der Unfiltratseite befreit und ein möglicher Abfluss von im Filtergehäuse noch vorhandenem Fluid respektive Flüssigkeit kann über den bodenseitigen Ablauf am Filtergehäuse erfolgen. Besonders bevorzugt versperrt jedoch die Absperreinrichtung im betätigten Zustand sowohl den Zulauf als auch den Ablauf, ohne dass zusätzliche Ventileinrichtungen in den Verbindungsleitungen zu Zu- und Ablauf benötigt werden.

Dadurch, dass mittels einer Absperreinrichtung eine in einer Öffnungsstellung vorhandene fluidführende Verbindung zwischen Zu- und Ablauf in einer Sperrstellung abgesperrt ist und dass mittels einer Ansteuereinrichtung die Absperreinrichtung in diese einzelnen Stellungen bringbar ist, lässt sich insbesondere die Fluidzufuhr in das Filtergehäuse absperren, was das Öffnen des Filtergehäuses und den Austausch eines verbrauchten Filterelementes gegen ein Neuelement deutlich erleichtert, da nicht ständig mit nachströmendem Fluid in Form von Unfiltrat gerechnet werden muss und die gegebenenfalls nach außen aus der Filtervorrichtung austretende Fluidmenge ist auf ein Minimum begrenzt. Zwar wird auch bei bekannten Vorrichtungslösungen für einen Elementwechsel ein Ventil in einer Verbindungsleitung zum Fluidzulauf gesperrt; allein die zwischen dem Ventil und dem Zulauf in der Verbindungsleitung verbleibende Fluidmenge ist erheblich und führt zu einer erhöhten Menge an unbeabsichtigt austretendem Fluid bei einem Elementwechsel. Dies wird mit der erfindungsgemäßen Vorrichtungslösung in jedem Fall vermieden, da die fluidführende Verbindung zwischen Zu- und Ablauf zwischen denen das Filterelement aufgenommen ist mittels einer von einer Ansteuereinrichtung betätigbaren Absperreinrichtung unterbunden ist, was vorzugsweise durch Handbetätigung erfolgt. Die bevorzugte Einbaulage der Filtervorrichtung ist dabei vertikal bei senkrechter Längsausrichtung des Filtergehäuses.

Von besonderem Vorteil ist dabei, wenn am Filtergehäuse zusätzlich ein Fluidablauf, vorzugsweise bodenseitig vorgesehen, wird, der nach Absperren der fluidführenden Verbindung zwischen Zu- und Ablauf betätigt, die Abfuhr von verbleibendem Restfluid aus dem Filtergehäuse nach außen in eine gesicherte Umgebung, beispielsweise in ein Auffanggefäß, ermöglicht, so dass dahingehend jegliche Umweltbeeinträchtigung durch Austreten des Fluids, wie Hydrauliköl, unterbleibt.

Bei einer weiteren bevorzugten Ausführungsform der erfindungsgemäßen Filtervorrichtung ist vorgesehen, dass die elliptisch ausgebildete Trennwand entlang ihres Außenumfanges eine Dichteinrichtung aufweist und dass die Trennwand von einer Öffnung durchgriffen ist, die mit dem Inneren des hohlzylindrischen Filterelementes in Fluidverbindung steht. Insoweit trägt die schräggestellte, plattenartige Trennwand an ihrem Außenumfang die Dichtung, die in der vertikalen Betriebsstellung oder Öffnungsstellung gesehen, einmal oberhalb der einen Anschlussstelle und einmal unterhalb der anderen Anschlussstelle verläuft. Durch die voll umfängliche Anordnung der Dichtung zwischen der Außenumfangsseite der Trennwand und der zuordenbaren Gehäuseinnenseite des Filterkopfes ist eine besonders gute Dichtwirkung zwischen dem Unfiltrat- und dem Filtratstrom im Filterbetrieb erzielbar. Im normalen Filtrationsbetrieb ist die schräggestellte, plattenförmige Trennwand von Fluiddruck beaufschlagt, was sich auf die Dichtung überträgt, die dann mit einer vorgebbaren Dichtkraft auf der Innenseite des Filtergehäuses anliegend die gewünschte Abdichtung gewährleistet. Bei Stillstand respektive bei Tausch des Filterelementes entfällt der Fluiddruck, was die Trennwand nebst Dichtung entlastet und der Verbund von Trennwand und Dichtung lässt sich dann weitgehend kräftefrei verschwenken. Die Dichtung ist eine mehrlagige Formdichtung, die bei guter Abdichtwirkung dennoch der Schwenkbewegung der Trennplatte einen geringen Widerstand entgegensetzt und abriebfest ist.

Bei einer weiteren bevorzugten Ausführungsform der erfindungsgemäßen Filtervorrichtung ist vorgesehen, dass die Öffnung in der Trennwand als Teil einer Verbindungseinrichtung zumindest teilweise von einer Gewindestrecke begrenzt ist, die dem Festlegevorgang des Filterelementes im Filtergehäuse über dessen zugeordnete Gewindestrecke als einem weiteren Teil der Verbindungseinrichtung dient. Dergestalt lässt sich das Filterelement von der Absperreinrichtung räumlich und funktionsmäßig separieren und gegen ein gleichgeartetes Neuelement tauschen, wobei die Absperreinrichtung im Filtergehäuse im Bereich zwischen Zulauf und Ablauf verbleibt.

Um einen solchen sicheren Verbleib im Filtergehäuse zu gewährleisten, ist bevorzugt vorgesehen, dass die Trennwand ein Begrenzungselement aufweist, das mit benachbarten Gehäuseteilen derart zusammenwirkt, dass die Trennplatte zwischen der Öffnungs- und der Sperrstellung, vorzugsweise um 90°, mittels der Ansteuereinrichtung verschwenkbar im Filtergehäuse mittels einer Führungseinrichtung geführt ist. Dergestalt lässt sich über einen geringen Schwenkbereich von etwa 90° mittels der Ansteuereinrichtung die Trennwand mit ihrem jeweiligen Sperrelement als Bestandteil der Absperreinrichtung verschwenken, so dass in funktionssicherer Weise zwischen der Öffnungs- und der Sperrstellung sowie in umgekehrter Abfolge geschaltet werden kann.

Vorzugsweise ist dabei vorgesehen, dass die Führungseinrichtung mindestens eine Raste, vorzugsweise an der Absperreinrichtung, aufweist, die in eine Führungsnut, vorzugsweise im Filtergehäuse, derart aufgenommen ist, dass die Absperreinrichtung radial drehbar und in axialer Richtung entlang der Längsausrichtung des Filtergehäuses gesehen stationär im Filtergehäuse aufgenommen ist. Auf diese Art und Weise ist eine sichere, drehbare Festlegung der Absperreinrichtung im Filtergehäuse erreicht.

Bei einer weiteren bevorzugten Ausführungsform der erfindungsgemäßen Filtervorrichtung ist vorgesehen, dass die Anschlussstellen mit Zu- und Ablauf zur Längsausrichtung des Filtergehäuses gesehen einander diametral gegenüberliegend in mindestens ein- und derselben Ebene verlaufend im Filtergehäuse angeordnet sind. Dergestalt ist in besonders platzsparender Weise die Fluidführung im Filtergehäuse erreicht und die geradlinig verlaufenden Zu- und Abführkanäle reduzieren den Herstellaufwand und die Herstellkosten für die gesamte Filtervorrichtungslösung.

Bei einer weiteren bevorzugten Ausführungsform der erfindungsgemäßen Filtervorrichtung ist vorgesehen, dass die Ansteuereinrichtung einen Gehäusedeckel aufweist, der vorzugsweise bodenseitig am Filtergehäuse in lösbarer Weise angeordnet und mit Steuernocken versehen eine Endkappe des Filterelementes beim Betätigen derart mitnimmt, dass über das Filterelement und die Verbindungseinrichtung die Absperreinrichtung zwischen der Öffnungs- und der Sperrstellung sowie umgekehrt schwenkbar ist. Beim Öffnen respektive dem Abnehmen des Gehäusedeckels vom sonstigen Filtergehäuse kann wie bereits dargelegt, aus dem Zu- und dem Ablauf kein Fluid mehr nachlaufen und nach außen gelangen, insbesondere wenn nach Betätigen der Absperreinrichtung über eine Ablassschraube das Innere des Filtergehäuses entleert wird. Mit dem kompletten Öffnen und Entfernen des Gehäusedeckels wird das Filterelement vollständig über den Gehäusedeckel aus der sonstigen Filtervorrichtung entnommen, was durch eine Rastverbindung zwischen der unteren Endkappe und dem benachbarten Gehäusedeckel ermöglicht ist.

Bei einer weiteren bevorzugten Ausführungsform der erfindungsgemäßen Filtervorrichtung ist vorgesehen, dass die eine Elementkappe des Filterelementes zwei Kappenteile aufweist, die federelastisch nachgiebig miteinander verbunden sind und dass das eine Kappenteil das Elementmaterial des Filterelementes bodenseitig aufnimmt und dass das andere Kappenteil Vorsprünge mit Führungsschrägen und Widerlagerflächen aufweist, die mit den Steuernocken am Gehäusedeckel zusammenwirken. Bei eingesetztem Neuelement in den Gehäusedeckel wird dieser bodenseitig auf das freie untere Ende des sonstigen Filtergehäuses auf- oder eingeschraubt und das Element wird durch die Steuernocken im Gehäusedeckel und die Vorsprünge am unteren Kappenteil der unteren Endkappe des Filterelementes mitgedreht. Hierbei kommen beim Auf- oder Einschrauben des Gehäusedeckels die Führungsschrägen der Vorsprünge am unteren Kappenteil zum Einsatz und beim Ab- oder Ausschrauben die jeweils benachbart zu den Führungsschrägen gegenüberliegenden Widerlagerflächen als Bestandteil der genannten Vorsprünge des Endkappenteils.

Bei einer weiteren bevorzugten Ausführungsform der erfindungsgemäßen Filtervorrichtung ist vorgesehen, dass der Gehäusedeckel bodenseitig auf das sonstige, topfförmige Filtergehäuse als Teil desselben ein- oder aufschraubbar ist und dass die Gewindesteigung des dahingehenden Verbindungsbereiches weniger steil ist als die in Eingriff miteinander befindlichen Verbindungsgewinde der Verbindungseinrichtung zwischen der Absperreinrichtung und einer benachbart angeordneten Elementkappe des Filterelementes. Im Rahmen der Auf- oder Einschraubbewegung des Gehäusedeckels auf das sonstige Filtergehäuse kommt das obere Gewinde an der oberen Endkappe zusehends in Eingriff mit dem zugeordneten Gewinde in der Trennwand der Absperreinrichtung und ist eine Anschlagsstellung zwischen den dahingehenden Gewindestrecken erreicht, kann über den Gehäusedeckel mit seinen Steuernocken als Teil der Absperreinrichtung durch entsprechende Mitnahme des Filterelementes auch die Absperreinrichtung zwischen Öffnungs- und Sperrstellung verschwenkt werden.

Da die Gewindesteigung des Verbindungsbereiches vorzugsweise weniger steil ist, als die in Eingriff miteinander befindlichen Verbindungsgewinde der Verbindungseinrichtung, lässt sich mit einer geringen Anzahl von Umdrehungen am Gehäusedeckel ein relativ großer Zustellweg für das Gewinde der oberen Endkappe erreichen, was die Handhabung verbessert und schnelle Wechselvorgänge für ein Filterelement erlaubt. Durch die angesprochene unterschiedliche Steigung der Gewinde am Gehäusedeckel und an der Elementkappe macht das Filterelement darüber hinaus eine axiale Verfahrbewegung mit, welche durch die Federsegmente, die die beiden Kappenteile der unteren Endkappe federelastisch nachgiebig miteinander verbinden, ausgeglichen werden kann. Auch lässt sich dergestalt ein mögliches Axialspiel der Baukomponenten der Filtervorrichtung verlässlich ausgleichen, so dass bei der Herstellung keine engen Toleranzen eingehalten werden müssen, was wiederum die Herstellkosten senkt.

Weitere Vorteile der erfindungsgemäßen Lösung sind Gegenstand der Unteransprüche.

Im Folgenden wird eine erfindungsgemäße Filtervorrichtung anhand der Zeichnung näher erläutert. Dabei zeigen in prinzipieller und nicht maßstäblicher Darstellung die
- Fig. 1: einen schematisch vereinfachten Längsschnitt durch eine erfindungsgemäße Filtervorrichtung in ihrer senkrechten Betriebsoder Gebrauchsstellung;

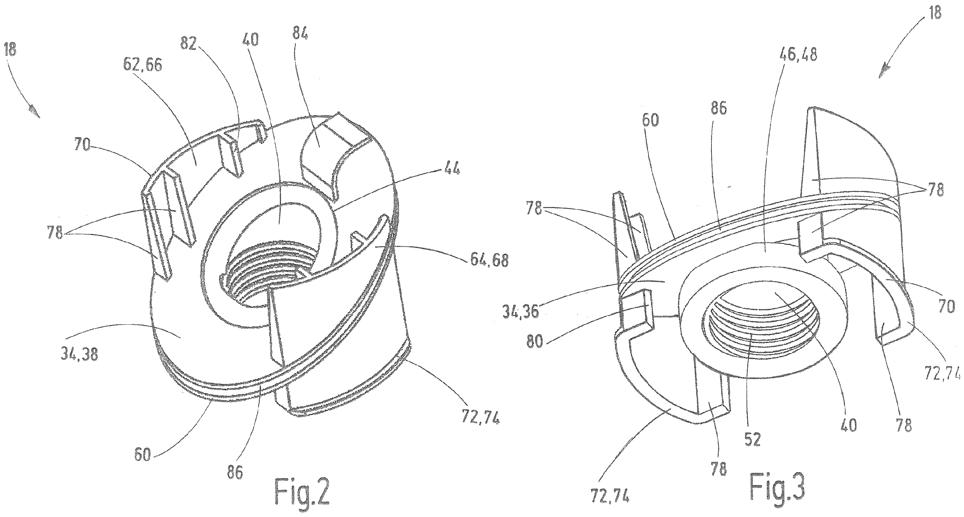

- Fig. 2: eine perspektivische Schrägansicht von oben auf eine in Einzeldarstellung gezeigte Absperreinrichtung der Filtervorrichtung aus Fig. 1;
- Fig. 3: eine perspektivische Schrägansicht von unten auf die Absperreinrichtung aus Fig. 2;

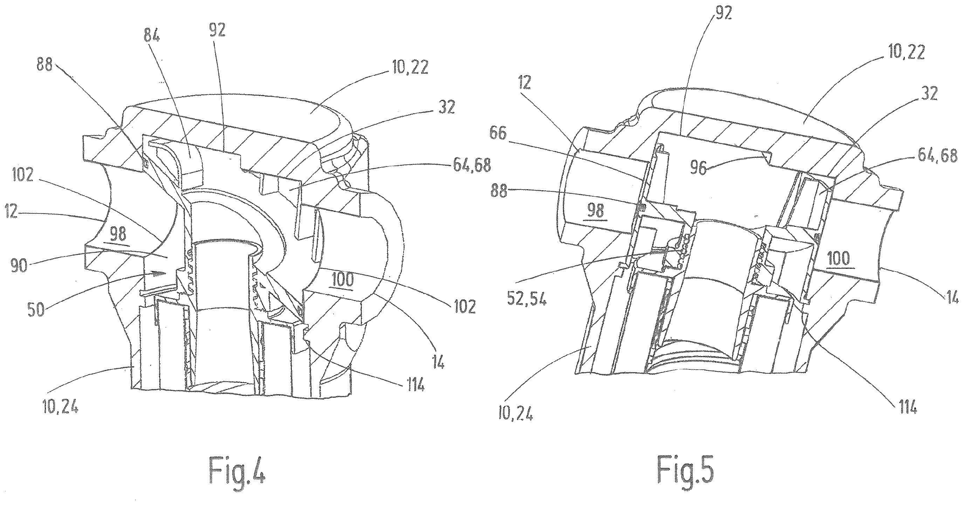

- Fig. 4: eine perspektivische Schrägansicht auf einen Teillängsschnitt der Filtervorrichtung aus Fig. 1 im Bereich ihres Filtergehäusekopfes, wobei die zumindest teilweise im Filtergehäusekopf aufgenommene Absperreinrichtung aus Fig. 2 und 3 in ihrer Öffnungsstellung gezeigt ist;
- Fig. 5: eine perspektivische Schrägansicht von oben auf einen Teillängsschnitt der Filtervorrichtung aus Fig. 1 im Bereich ihres Filtergehäusekopfes, wobei die Absperreinrichtung in ihrer Sperrstellung gezeigt ist;

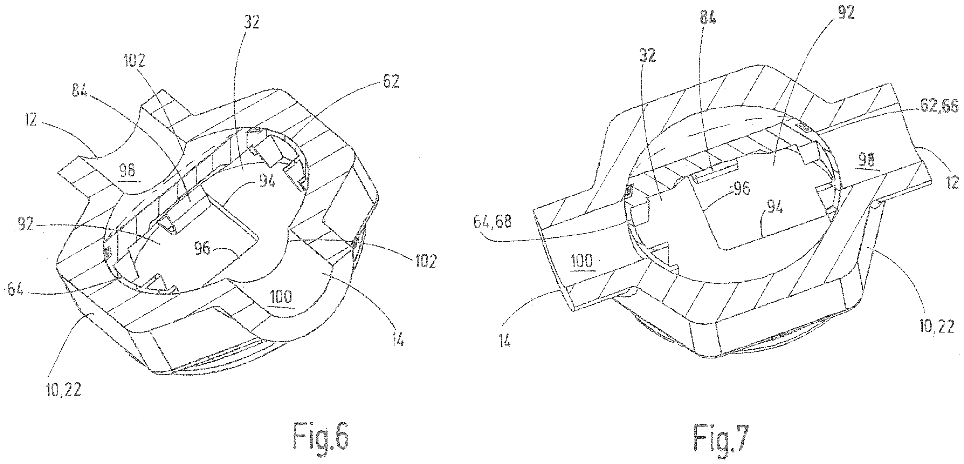

- Fig. 6, 7: jeweils eine perspektivische Schrägansicht von unten auf einen schematisch vereinfachten Querschnitt durch den Filtergehäusekopf der Filtervorrichtung aus Fig. 4 bzw. Fig. 5;

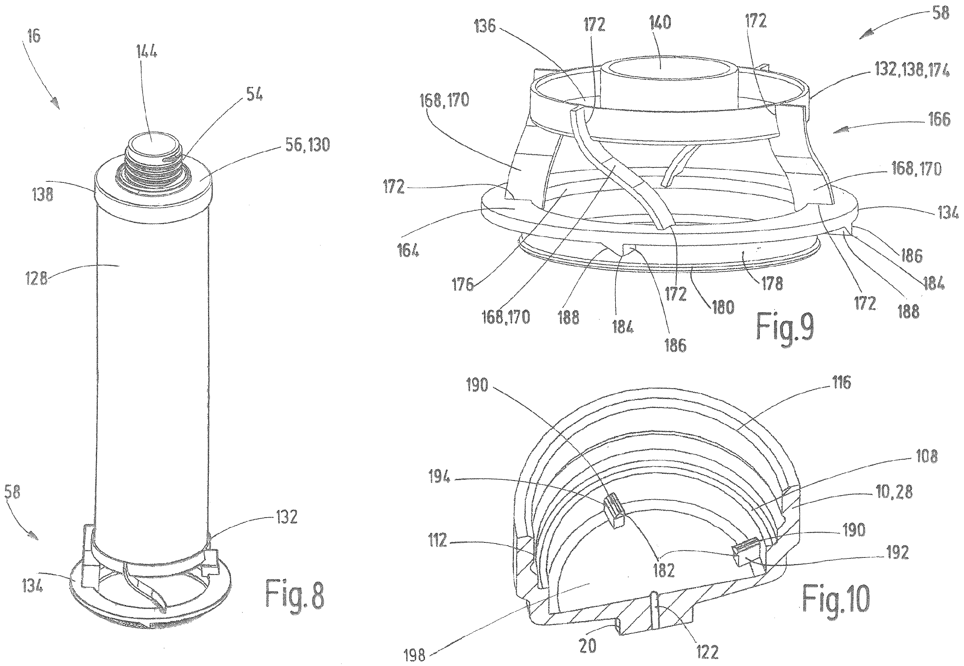

- Fig. 8: eine perspektivische Schrägansicht von oben auf ein in Einzeldarstellung gezeigtes, als Austauschelement dienendes Filterelement der Filtervorrichtung aus Fig. 1;
- Fig. 9: eine perspektivische Schrägansicht von oben auf eine untere Endkappe des Filterelementes aus Fig. 8; und
- Fig. 10: eine perspektivische Schrägansicht von oben auf einen Längsschnitt eines Gehäusedeckels der Filtervorrichtung aus Fig. 1.

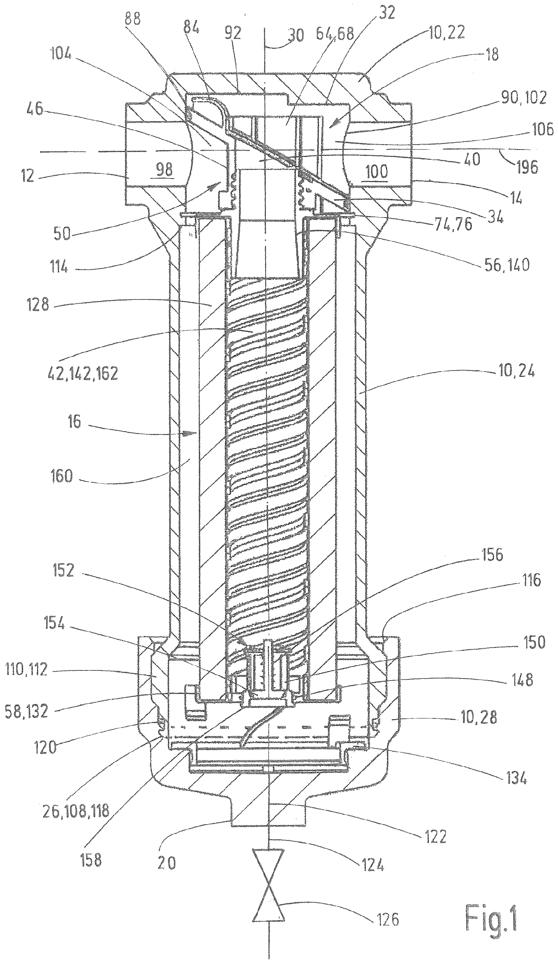

Fig. 1 zeigt eine erfindungsgemäße Filtervorrichtung mit einem Filtergehäuse 10, das eine Anschlussstelle 12 als Zulauf für Unfiltrat und eine weitere Anschlussstelle 14 als Ablauf für Filtrat aufweist. Zu- 12 und Ablauf 14 sind regelmäßig feste Bestandteile eines nicht näher dargestellten hydraulischen Arbeitskreises einer Hydraulikanlage.

In dem Filtergehäuse 10 ist ein Filterelement 16 austauschbar aufgenommen und zwischen Zu- 12 und Ablauf 14 eine Absperreinrichtung 18 vorgesehen, die mittels einer Ansteuereinrichtung 20 zwischen einer Öffnungsstellung, in der die Absperreinrichtung 18 die fluidführende Verbindung zwischen Zu- 12 und Ablauf 14 freigibt, und einer Sperrstellung bewegbar ist, in der die Absperreinrichtung 18 diese fluidführende Verbindung sperrt.

In der Öffnungsstellung angeordnet, dient die Absperreinrichtung 18 neben dem Freigeben der fluidführenden Verbindung zwischen Zu- 12 und Ablauf 14 zum Führen des Unfiltrat- und des Filtratstroms im Filtergehäuse 10 und in der Sperrstellung angeordnet, lediglich dem Sperren der dahingehenden fluidführenden Verbindung.

Das Filtergehäuse 10 weist einen Filtergehäusekopf 22 auf, an den sich einstückig ein Zylindergehäuseteil 24 anschließt. Das Zylindergehäuseteil 24 weist auf seiner dem Filtergehäusekopf 22 abgewandten Seite eine Öffnung 26 auf, die von einem von dem Zylindergehäuseteil 24 abnehmbaren und mit diesem in wiederlösbarer Weise verbindbaren Filtergehäusedeckel 28 verschließbar ist. Die beiden Anschlussstellen 12, 14 sind in dem Filtergehäusekopf 22 vorgesehen und sind fluidführend mit nicht dargestellten starren Fluidleitungen der hydraulischen Anlage verbindbar. Das zylindrische Filterelement 16 ist austauschbar in dem Filtergehäuse 10 angeordnet. In den Filtergehäusekopf 22 ist, in Richtung einer Längsachse 30 der Filtervorrichtung gesehen, zwischen einem Boden 32 des Filtergehäusekopfes 22 und dem Filterelement 16 und, in Radialrichtung gesehen, zwischen den beiden Anschlussstellen 12, 14 die Absperreinrichtung 18 als eigenständiges Bauteil eingesetzt.

Die Absperreinrichtung 18 weist eine Trennwand 34 auf, die gegenüber der Längsachse 30 der Filtervorrichtung schräg geneigt ausgerichtet ist. So weist die Trennwand 34 zwei zueinander parallel ausgerichtete, elliptische Wandflächen 36, 38 auf, die jeweils zwischen sich und der Längsachse 30 der Filtervorrichtung einen Winkel von ca. 60 Grad einschließen. Eine Projektion der jeweiligen Wandflächen 36, 38 in Richtung der Längsachse 30 der Filtervorrichtung auf eine fiktive erste Ebene, die die Längsachse 30 der Filtervorrichtung als Normale aufweist, ist ein Kreis, dessen Durchmesser dem Innendurchmesser des Filtergehäusekopfes 22 entspricht.

Durch die Trennwand 34 erstreckt sich in Richtung der Längsachse 30 der Filtervorrichtung ein zentraler Fluidkanal 40. Das dem Filterelement 16 zugewandte eine Ende des Fluidkanals 40 mündet in einen zylindrischen Hohlraum 42 des Filterelementes 16 aus und das andere Ende ist durch eine dem Boden 32 des Filtergehäusekopfes 22 der Filtervorrichtung zugewandte zentrale Öffnung 44 der Trennwand 34 gebildet. Der Innendurchmesser des Fluidkanals 40 erweitert sich an seinem dem Boden 32 des Filtergehäusekopfes 22 zugewandten Endbereich stufenartig. Der zentrale Fluidkanal 40 der Trennwand 34 verläuft durch eine hohlzylindrische Anschlusshülse 46, die sich als einstückiger Bestandteil der Trennwand 34 von ihrer einen Wandfläche 36 in Richtung der Längsachse der Filtervorrichtung weg erstreckt, ohne den niedrigsten Punkt der in ihrer Funktionsstellung angeordneten Trennwand 34 zu überstehen. Der Außendurchmesser der Anschlusshülse 46 erweitert sich in ihrem der Trennwand 34 abgewandten Endbereich derart stufenartig, dass an diesem Endbereich ein sich in Radialrichtung von dem Außenumfang der Anschlusshülse 46 wegerstreckender vollumfänglicher Vorsprung 48 gebildet ist. An einem der Trennwand 34 abgewandten Endbereich des Innenumfangs der Anschlusshülse 46 ist als Teil einer ersten Verbindungseinrichtung 50 ein Innengewinde 52 vorgesehen zum Verbinden mit einem Außengewinde 54 einer ersten Endkappe 56 des Filterelements 16, das ebenfalls Teil der ersten Verbindungseinrichtung 50 ist.

Bündig mit dem radialen Außenumfang 60 der Trennwand 34 weist die Absperreinrichtung 18 zwei sich in Bezug auf die Längsachse 30 der Filtervorrichtung diametral gegenüberliegende, beidseitig von der Trennwand 34 wegerstreckende und entsprechend dem Umfangsverlauf der Trennwand 34 zylindrisch ausgebildete Zylinderwandsegmente 62, 64 auf, die einander entsprechen. Der Teil des jeweiligen Zylinderwandsegments 62, 64, der sich von der einen Wandfläche 36 der Trennwand 34 wegerstreckt, ragt in Axialrichtung über den niedrigsten Punkt der in ihrer Funktionsposition angeordneten Trennwand 34 hinaus, wohingegen der Teil des jeweiligen Zylinderwandsegments 62, 64, der sich von der anderen Wandfläche 38 der Trennwand 34 wegerstreckt, in Axialrichtung nicht über den höchsten Punkt der derart angeordneten Trennwand 34 hinausragt. Die beiden Zylinderwandsegmente 62, 64 weisen parallel zueinander sowie senkrecht und koaxial zur Längsachse 30 der Filtervorrichtung verlaufende Stirnseiten 70 auf. Das eine 62 und das andere 64 Zylinderwandsegment bilden ein erstes Sperrelement 66 der Trennwand 34 für den Zulauf 12 bzw. ein zweites Sperrelement 68 der Trennwand 34 für den Ablauf 14.

An dem der Trennwand 34 abgewandten Ende des jeweiligen Teils des Zylinderwandsegments 62, 64, der sich von der einen Wandfläche 36 der Trennwand 34 wegerstreckt, steht jeweils in Radialrichtung nach außen von diesem Zylinderwandsegment 62, 64 ein eine Raste 72 bildender Vorsprung vor. Als Teil einer Führungseinrichtung 74 greifen die beiden Rasten 72 in eine in den Innenumfang 90 des Filtergehäusekopfs 22 eingebrachte Führungsnut 76 der Führungseinrichtung 74 ein, die senkrecht und koaxial zur Längsachse 30 verläuft, so dass die Absperreinrichtung 18 mit ihren Rasten 72 in der Führungsnut 76 geführt, in dem Filtergehäusekopf 22 um die Längsachse 30 der Filtervorrichtung drehbar ist.

Von den, in Umfangsrichtung gesehen, seitlichen Endbereichen jedes Zylinderwandsegments 62, 64 erstreckt sich zu einer fiktiven zweiten Ebene hin, die den höchsten und den niedrigsten Punkt der Trennwand 34 der in ihrer Funktionsstellung angeordneten Absperreinrichtung 18 aufweist, jeweils eine Rippe 78 weg. Die zweite Ebene entspricht der in Fig. 1 dargestellten Schnittebene. Das sich von dem jeweiligen Teil des Zylinderwandsegments 62, 64, der sich von der einen Wandfläche 36 der Trennwand 34 wegerstreckt, abgewandte Ende 80 der Rippe 78 verläuft jeweils parallel zur zweiten Ebene. Zwischen den beiden Rippen 78 eines jeweiligen Teils des Zylinderwandsegments 62, 64, der sich von der anderen Wandfläche 38 der Trennwand 34 wegerstreckt, sind jeweils von den restlichen Rippen 78 beabstandet, zwei sich von diesem Zylinderwandsegment 62, 64 zur zweiten Ebene hin wegerstreckende, weitere Rippen 78 vorgesehen. Jedes sich von dem jeweiligen Teil des Zylinderwandsegments 62, 64, das sich von der anderen Wandfläche 38 der Trennwand 34 wegerstreckt, abgewandte Ende 82 der Rippen 78 verläuft ausgehend von der Trennwand 34 in Axialrichtung schräg von der Trennwand 34 und der zweiten Ebene weg. Die Rippen 78 dienen zur Stabilisierung des jeweiligen Zylinderwandsegments 62, 64.

In einem Bereich der anderen Wandfläche 38 zwischen dem höchsten Punkt der Trennwand 34 der in ihrer Funktionsstellung angeordneten Absperreinrichtung 18 und der zentralen Öffnung 44 der Trennwand 34 erstreckt sich ausgehend von einer der Öffnung 44 benachbarten Stelle in diesem Bereich ein, vorzugsweise federelastisch nachgiebiges, bandförmiges Begrenzungselement 84 bogenförmig und beabstandet von der anderen Wandfläche 38 derart in Richtung nach außen weg, dass der freie Endbereich des Begrenzungselements 84 senkrecht zur Längsachse 30 ausgerichtet ist. Dabei überragt der freie Endbereich des Begrenzungselements 84 die Trennwand 34 in Axialrichtung, ohne diese in Radialrichtung zu überstehen. Das Begrenzungselement 84 ist im Wesentlichen bügelförmig ausgebildet und ist symmetrisch zur zweiten Ebene ausgerichtet.

Entlang ihres Außenumfangs 60 ist in die Trennwand 34 mittig eine Ringnut 86 eingebracht, in der eine Dichteinrichtung 88 in Form einer ringförmigen Dichtung angeordnet ist, die in jeder Drehstellung der Absperreinrichtung 18 an der Innenwand 90 des Filtergehäusekopfes 22 abdichtend anliegt.

In die ebene bzw. flache Innenseite des kreisrunden Bodens 32 des Filtergehäusekopfes 22 ist eine Ausnehmung 92 eingebracht, die durch eine erste 94 und eine zweite 96 Stufe in dem Boden 32 mitbegrenzt ist. Die beiden Stufen 94, 96 verlaufen von einer gemeinsamen Übergangsstelle im Mittenbereich des Bodens 32 des Filtergehäusekopfes 22 senkrecht zueinander ausgerichtet in Radialrichtung nach außen bis zu der in diesem Bereich zylindrischen Außenwand des Zylindergehäusekopfes 22. Die erste 94 und die zweite 96 Stufe des Bodens 32 des Filtergehäusekopfes 22 dienen als Anschlag für die eine bzw. die andere Seitenfläche des freien Endbereichs des Begrenzungselements 84. Dadurch ist die mittels der Führungseinrichtung 74 geführte Drehung der Absperreinrichtung 18 im Filtergehäusekopf 22 zwischen ihrer Öffnungsstellung, in der die eine Seitenfläche des freien Endbereichs des Begrenzungselements 84 mit der ersten Stufe 94 des Bodens 32 des Filtergehäusekopfes 22 in Anlage ist, und ihrer Sperrstellung, in der die andere Seitenfläche des freien Endbereichs des Begrenzungselements 84 mit der zweiten Stufe 96 des Bodens 32 des Filtergehäusekopfes 22 in Anlage ist, auf einen Drehwinkel von 90 Grad begrenzt. Es ist vorgesehen, dass die Sperrelemente 66, 68 eine Einmündung 102 des Zu- 12 bzw. des Ablaufs 14 in das Innere des Filtergehäusekopfes 22 nicht nur dann vollständig überdecken und freigeben, wenn das Begrenzungselement 84 in Anlage mit der jeweiligen Stufe 94, 96 im Boden 32 des Gehäusekopfes 22 ist, sondern auch schon dann vollständig überdecken bzw. freigeben, wenn das Begrenzungselement 84 von jeder Stufe 94, 96 beabstandet, näher an der jeweiligen einen Stufe 94, 96 angeordnet ist als an der anderen Stufe 94, 96. Auch sind zwischen den Drehstellungen der Absperreinrichtung 18, in denen die Sperrelemente 66, 68 die Einmündungen 102 des Zu-12 und des Ablaufs 14 vollständig überdecken bzw. freigeben, Drehstellungen der Absperreinrichtung 18 vorhanden, in denen die Einmündungen 102 teilweise von den Sperrelementen 66, 68 überdeckt bzw. freigegeben sind.

Ist die Absperreinrichtung 18 in ihrer Öffnungsstellung angeordnet, führt die Trennwand 34 mit ihren einander gegenüberliegenden Wandseiten 36, 38 unter Anströmung derselben den Unfiltrat- und den Filtratstrom getrennt voneinander, wobei die zentrale Öffnung 44 der Trennwand 34 mit der weiteren Anschlussstelle 14 fluidführend verbunden ist.

Ausgehend von der Anschlussstelle 12 für die Zufuhr des Unfiltratstroms und ausgehend von der weiteren Anschlussstelle 14 für die Abfuhr des Filtratstroms erstreckt sich jeweils ein zylindrischer Fluidkanal 98, 100 radial durch den Filtergehäusekopf 22. Dadurch ist die Strömungsrichtung des Fluids durch die jeweilige Anschlussstelle 12, 14 im Wesentlichen senkrecht zu der Längsachse 30 des Filtergehäuses 10 ausgerichtet. Die Längsachse 30 des Filtergehäuses 10 entspricht der Längsachse des Filtergehäusekopfes 22, des Zylindergehäuseteils 24, des Filtergehäusedeckels 28, der Absperreinrichtung sowie des Filterelementes 16. Die Fluidkanäle 98, 100 der Anschlussstellen 12, 14 sind derart einander gegenüberliegend im Filtergehäusekopf 22 ausgebildet, dass diese eine gemeinsame, durch ihre mitten verlaufende, zentrale Achse 196 aufweisen. In der zweiten Ebene liegen die Längsachse 30 der Filtervorrichtung und die zentrale Achse 196 der Anschlussstellen 12, 14, die sich senkrecht schneiden.

Zudem liegen die beiden Sperrelemente 66, 68 der Absperreinrichtung 18, wenn die Absperreinrichtung 18 in ihrer Öffnungsstellung angeordnet ist, außenseitig an der zylindrischen Innenwand 90 des Filtergehäusekopfes 22 an, ohne die Einmündung 102 jedes sich von der jeweiligen Anschlussstelle 12, 14 in den Hohlraum des Filtergehäusekopfes 22 erstreckenden Fluidkanales 98, 100 zu verschließen.

Zumindest in der Öffnungsstellung der Absperreinrichtung 18 ist die Trennwand 34 der Absperreinrichtung 18 gegenüber der Strömungsrichtung des Fluids durch den jeweiligen Fluidkanal 98, 100 der Anschlussstellen 12, 14 schräg geneigt angeordnet. Zudem ist die Absperreinrichtung 18 in ihrer Öffnungsstellung derart im Filtergehäusekopf 22 angeordnet, dass, in Richtung der Längsachse 30 der Filtervorrichtung gesehen, eine Umfangsseite 60 der Trennwand 34 im Bereich der Anschlussstelle 12 zwischen dem Boden 32 des Filtergehäusekopfes 22 und der Anschlussstelle 12 sowie im Bereich der weiteren Anschlussstelle 14 zwischen einer innenumfangsseitigen Stufe 114, die im Bereich des Übergangs des Filtergehäusekopfes 22 zum Zylindergehäuseteil 24 vorgesehen ist, und der weiteren Anschlussstelle 14 angeordnet ist.

Durch die dahingehende Anordnung in der Öffnungsstellung separiert die Absperreinrichtung 18 einen im Filtergehäusekopf 22 angeordneten Strömungsraum 104, der durch die eine Wandfläche 36 der Trennwand 34 mitbegrenzt ist, von einem im Filtergehäusekopf 22 angeordneten weiteren Strömungsraum 106, der durch die andere Wandfläche 38 der Trennwand 34 mitbegrenzt ist. In den Strömungsraum 104 mündet der Fluidkanal 98 der Anschlussstelle 12 umlenkungsfrei aus und in den weiteren Strömungsraum 106 mündet der weitere Fluidkanal 100 der weiteren Anschlussstelle 14 umlenkungsfrei aus. Die Trennwand 34 wird in dem Strömungsraum 104 auf ihrer einen Wandfläche 36 von dem den Fluidkanal 98 der Anschlussstelle 12 durchströmenden Fluid und in dem weiteren Strömungsraum 106 auf ihrer anderen Wandfläche 38 von dem den weiteren Fluidkanal 100 der weiteren Anschlussstelle 14 durchströmenden Fluid angeströmt. Dabei dichtet die Trennwand 34 den Unfiltrat- gegenüber dem Filtrat-Strom ab.

Ist die Absperreinrichtung 18 in ihrer Sperrstellung angeordnet, verschließt das eine Sperrelement 66 der Absperreinrichtung 18 die Einmündung 102 des Zulaufs 12 in das Innere des Filtergehäusekopfs 22 und das andere Sperrelement 68 die Einmündung 102 des Ablaufs 14 weitestgehend fluiddicht.

Der Filtergehäusedeckel 28 weist in Richtung des Filtergehäusekopfes 22 unter Ausbildung einer Stufe 108 eine Erweiterung seines Innendurchmessers auf und das Zylindergehäuseteil 24 weist an dem Filtergehäusedeckel 28 zugewandten Endbereich eine Erweiterung 110 des Außendurchmessers auf. Zum Verbinden des Zylindergehäuseteils 24 mit dem Filtergehäusedeckel 28, weist das Zylindergehäuseteil 24 im Bereich der Erweiterung 110 seines Außendurchmessers ein Außengewinde 112 zum in Eingriff bringen mit einem korrespondierenden Innengewinde 112 auf, das an dem dem Filtergehäusekopf 22 zugewandten Endbereich des Innenumfanges des Filtergehäusedeckels 28 vorgesehen ist, zwischen seiner Stufe 108 und seiner Öffnung 116. Die Gewindesteigung des dahingehenden Verbindungsbereiches 112 ist weniger steil als die in Eingriff miteinander befindlichen Verbindungsgewinde 52, 54 der ersten Verbindungseinrichtung 50 zwischen der Absperreinrichtung 18 und der ersten Elementkappe 56 des Filterelementes 16. Sind Zylindergehäuseteil 24 und Filtergehäusedeckel 28 miteinander verbunden, gelangt die freie Stirnseite 118 des Zylindergehäuseteils 24 in Anlage mit der Stufe 108 des Filtergehäusedeckels 28. In dem Zylindergehäuseteil 24 ist an seinem Außenumfang im Bereich zwischen der Gewindestrecke 112 und seinem offenen Ende 26 eine Ringnut 120 vorgesehen, in der ein Dichtring 120 zur abdichtenden Anlage an dem Filtergehäusedeckel 28 aufgenommen ist.

In Axialrichtung kann sich durch den Filtergehäusedeckel 28 ein zentraler Fluidkanal 122 zum Abführen von Filtrat aus dem Filtergehäuse 10 erstrecken, dessen dem Filterelement 16 abgewandtes Ende an eine Fluidleitung 124 angeschlossen ist, in der eine Ventileinrichtung 126 zum Freigeben und Sperren des dahingehenden Fluidweges vorgesehen ist. Bevorzugt ist die Ventileinrichtung 126 jedoch in dem unteren Gehäusedeckel 28 integriert (nicht dargestellt).

Das Filterelement 16 ist endseitig mit zwei Endkappen 56, 58 versehen, zwischen denen sich das filtrierende Filtermaterial 128 erstreckt.

Das Filterelement 16 weist die das hohlzylinderförmige Filtermaterial 128 an seinem dem Filtergehäusekopf 22 zugewandten Ende einfassende obere erste Endkappe 56 auf und eine das hohlzylinderförmige Filtermaterial 128 an seinem dem Filtergehäusekopf 22 abgewandten und dem Gehäusedeckel 24 zugewandten Ende einfassende untere zweite Endkappe 58 auf.

Die erste Endkappe 56 weist ein scheibenringförmiges Basisteil 130 auf, das koaxial und senkrecht zur Längsachse 30 des Filterelements 16 verlaufend, mit der Stirnseite des Filtermaterials 128 in Kontakt ist, und ein Kappenteil 132 der zweiten Endkappe 58 weist ein scheibenförmiges Basisteil 136 auf. Von dem jeweiligen radial außenliegenden Endbereich des Basisteils 130 der ersten Endkappe 56 und des einen Kappenteils 132 der zweiten Endkappe 58 erstreckt sich in Richtung des Filtermaterials 128 ein zylinderförmiges Umfangsteil 138 weg, das mit seiner Innenseite an dem Außenumfang des Filtermaterials 128 in Anlage ist. Von dem radial innenliegenden Endbereich des Basisteils 130 der ersten Endkappe 56 und dem Basisteil 136 des einen Kappenteils 132 der zweiten Endkappe 58 erstreckt sich jeweils in Richtung des Filtermaterials 128 ein Anlagestutzen 140 in den Hohlraum 42 des Filtermaterials 128 hinein, zwischen denen und dem Filtermaterial 128 ein sich über die gesamte axiale Länge des Filtermaterials 128 erstreckendes Stützrohr 142 teilweise angeordnet ist.

Von dem radial innenliegenden Endbereich des Basisteils 130 der ersten Endkappe 56 erstreckt sich des Weiteren in Richtung des Filtergehäusekopfes 22 ein Anschlussstutzen 144 weg, an dessen Außenumfangsseite als Teil der ersten Verbindungseinrichtung 50 das Außengewinde 54 vorgesehen ist zum in Eingriff bringen mit dem Innengewinde 52 der Anschlusshülse 46 der Absperreinrichtung 18, das ebenfalls Teil der ersten Verbindungseinrichtung 50 ist.

Das Basisteil 136 des einen Kappenteils 132 der zweiten Endkappe 58 weist eine zentrale Öffnung 148 auf, die von einem in Richtung des Gehäusedeckels 28 geringfügig vorstehenden Zylinderteil 150 begrenzt ist, das von dem Anlagestutzen 140 dieses Kappenteils 132 in Radialrichtung beabstandet ist und ein Bypassventil 152 aufweist. So ist in dem Zylinderteil 150 ein Ventilschließkörper 154 geführt, der unter der Krafteinwirkung einer Druckfeder 156 in Richtung des Gehäusedeckels 28 vorgespannt, in seiner Schließstellung an einem in dem Zylinderteil 150 ausgebildeten Ventilsitz 158 in Anlage ist. Wenn bei einem Verblocken des Filterelements 16 ein Schwellenwert einer Druckdifferenz zwischen der Unfiltratseite 160 außerhalb des Filterelements 16 und der Filtratseite 162 innerhalb des Filterelements 16 erreicht ist, wird der Ventilschließkörper 154 durch den außerhalb des Filterelements 16 vorherrschenden Fluiddruck entgegen der Kraft der Druckfeder 156 in eine seiner Öffnungsstellungen gedrückt, in der das Bypassventil 152 die Unfiltratseite 160 und die Filtratseite 162 fluidführend miteinander verbindet.

Die zweite Endkappe 58 weist neben dem einen Kappenteil 132 ein anderes Kappenteil 134 auf, das ein scheibenringförmiges Basisteil 164 aufweist, das einen dem Außendurchmesser des Basisteils 136 des einen Kappenteils 132 in etwa entsprechenden Innendurchmesser und einen demgegenüber größeren Außendurchmesser aufweist.

Das eine 132 und das andere 134 Kappenteil der zweiten Endkappe 58 sind mittels einer federelastisch nachgiebigen zweiten Verbindungseinrichtung 166 derart miteinander verbunden, dass das andere Kappenteil 134 in Richtung von dem Filtermaterial 128 weg von dem einen Kappenteil 132 beabstandet angeordnet ist. Die zweite Verbindungseinrichtung 166 weist vier Verbindungselemente 168 auf, die jeweils durch ein im Wesentlichen S-förmig ausgebildetes, flaches Band 170 gebildet sind, das an seinem einen Endbereich mit dem einen 132 und an seinem anderen Endbereich mit dem anderen 134 Kappenteil der zweiten Endkappe 58 verbunden ist. Die Verbindungsstellen 172 des einen Kappenteils 132 mit dem einen Endbereich des jeweiligen Bandes 170 und die Verbindungsstellen 172 des anderen Kappenteils 134 mit dem anderen Endbereich des jeweiligen Bandes 170 sind, in Umfangsrichtung gesehen, in gleichen Winkelabständen angeordnet, nämlich mit einem Abstand von 90 Grad zwischen zwei benachbarten Verbindungsstellen 172.

Insbesondere aufgrund der unterschiedlichen Durchmesser der Basisteile 136, 164 des einen 132 und des anderen 134 Kappenteils der zweiten Endkappe 58, greift das jeweilige Band 170 mit seinem einen Endbereich an dem Außenumfang 174 des Umfangsteils 138 und der dem anderen Kappenteil 134 zugewandten Seite des Basisteils 136 des einen Kappenteils 132 an und mit seinem anderen Endbereich an dem Innenumfang 176 und der dem anderen Kappenteil 134 zugewandten Seite des Basisteils 164 des anderen Kappenteils 134 an.

Die Breite der Bänder 170 kann in etwa dem fünf bis achtfachen ihrer Materialdicke entsprechen, wobei die Länge der Bänder 170 derart gewählt sein kann, dass in einem unbelasteten Zustand der Axialabstand zwischen dem einen und dem anderen Kappenteil 132, 134 in etwa einem Viertel bis einem halben Durchmesser des einen Kappenteils 132 entspricht. Bei dieser Ausgestaltung stellen die Bänder 170 eine ausreichende Elastizität zur Verfügung, wenn die gesamte zweite Endkappe 58 als einstückiges Bauteil durch Spritzformen aus einem geeigneten Kunststoffmaterial hergestellt ist.

Von dem radial innenliegenden Endbereich des Basisteils 164 des anderen Kappenteils 134 der zweiten Endkappe 58 erstreckt sich, in Richtung von dem Filterelementmaterial 128 weg und zu dem Gehäusedeckel 28 hin, ein Stutzen 178. Von dem freien Ende des Stutzens 178 des anderen Kappenteils 134 in Radialrichtung nach außen weg erstreckt sich ein eine Raste 180 bildender, vollumfänglicher Vorsprung zum rastenden Eingreifen mit Rastnasen 182 an dem Gehäusedeckel 28. Auf der dem einen Kappenteil 132 abgewandten Seite des Basisteils 164 des anderen Kappenteils 134 der zweiten Endkappe 58 sind, in Umfangsrichtung gesehen, in gleichen Winkelabständen vier nasenförmige Vorsprünge 184 vorgesehen. In Umfangsrichtung gesehen, weist jeder Vorsprung 184 auf einer Seite eine Widerlagerfläche 186, die sich in Axialrichtung von dem Basisteil 164 wegerstreckt, und auf der der einen Seite gegenüberliegenden anderen Seite eine gegenüber der Widerlagerfläche 186 und der Längsachse 30 schräg verlaufende Führungsschräge 188 auf.

Auf der Innenseite des Bodens 198 des Gehäusedeckels 28 sind vier Steuernocken 190 vorgesehen, die sich, in Umfangsrichtung gesehen, in gleichen Winkelabständen in Axialrichtung vorstehend, von dem Boden 198 des Gehäusedeckels 28 weg erstrecken. In Umfangsrichtung gesehen, weist jede Rastnocke 190 auf einer Seite eine Widerlagerfläche 192, die sich in Axialrichtung von dem Boden 198 wegerstreckt, und auf der der einen Seite gegenüberliegenden anderen Seite eine Anlageschräge 194 auf. Auf der der Mitte des Gehäusedeckels 28 zugewandten Seite und an ihrem freien Ende weist jede Rastnocke 190 außerdem die radial nach Innen ragende Rastnase 182 zum rastenden Eingreifen mit der Raste 180 am anderen Kappenteil 134 der zweiten Endkappe 58 auf.

Zentral auf der Außenseite des Filtergehäusedeckels 28 ist die Ansteuereinrichtung 20 in Form eines Außensechskants vorgesehen.

In Fig. 1 ist der Filtergehäusedeckel 28 mit dem Zylindergehäuseteil 24 verschraubt und die Absperreinrichtung 18 in ihrer Öffnungsstellung angeordnet, in der die fluidführende Verbindung zwischen Zu- 12 und Ablauf 14 von der Absperreinrichtung 18 freigegeben ist. Die Gewinde 52, 54 der ersten Verbindungseinrichtung 50 zwischen der Absperreinrichtung 18 und der ersten Endkappe 56 sind vollständig in Eingriff miteinander. Gleichzeitig spannt die zweite Verbindungseinrichtung 166 federelastisch das andere Kappenteil 134 der zweiten Endkappe 58 in Richtung des Gehäusedeckels 28 vor, so dass die zweite Endkappe 58 mit dem Basisteil 164 ihres anderen Kappenteils 134 auf den freien Stirnseiten der Steuernocken 190 des Gehäusedeckels 28 aufliegt, zwischen denen die nasenförmigen Vorsprünge 184 des anderen Kappenteils 134 angeordnet sind. Zudem ist die zweite Endkappe 58 mit ihrer Raste 180 in rastendem Eingriff mit den an den Steuernocken 190 des Gehäusedeckels 28 ausgebildeten Rastnasen 182.

Im Folgenden wird die Funktion der erfindungsgemäßen Filtervorrichtung näher erläutert:
Soll, ausgehend von dem in Fig. 1 gezeigten Zustand der Filtervorrichtung, das Filterelement 16 aus dem Filtergehäuse entfernt werden, wird zunächst der Zulauf 12 drucklos gemacht, beispielsweise durch Ausschalten einer in den Figuren nicht gezeigten Druckversorgungseinrichtung, wobei der Ablauf 14 jederzeit drucklos ist. Darauffolgend wird der Filtergehäusedeckel 28 mittels der Ansteuereinrichtung 20 in eine Abschraub-Richtung um die Längsachse 30 der Filtervorrichtung gedreht. Bei dieser Drehbewegung gelangen die Widerlagerflächen 192 der Steuernocken 190 des Gehäusedeckels 28 in Anlage mit den Widerlagerflächen 186 der Vorsprünge 184 der zweiten Endkappe 58, so dass der Gehäusedeckel 28 das gesamte Filterelement 16 über seine zweite Endkappe 58 in Abschraub-Richtung in Drehung versetzt. Insbesondere aufgrund des drucklosen Zu- 12 und Ablaufs 14 wirkt auf die Dichteinrichtung 88 der Absperreinrichtung 18 kein Fluiddruck ein, so dass die Absperreinrichtung 18 in einem ersten Schritt leicht von dem Filterelement 16 von ihrer Öffnungsstellung, in der deren Begrenzungselement 84 teilweise mit seiner einen Seite in Anlage mit der ersten Stufe 94 der Ausnehmung 92 im Boden 32 des Gehäusekopfes 22 ist, um 90 Grad in ihre Sperrstellung mitgenommen bzw. -gedreht werden kann, in der deren Begrenzungselement 84 teilweise mit seiner anderen Seite in Anlage mit der zweiten Stufe 96 der Ausnehmung 92 im Boden 32 des Gehäusekopfes 22 ist.

In der Sperrstellung angelangt, verschließt die Absperreinrichtung 18 mit ihrem ersten Sperrelement 66 den Zulauf 12 und mit ihrem zweiten Sperrelement 68 den Ablauf 14 der Filtervorrichtung. Dadurch lässt sich die Fluidzufuhr in das Filtergehäuse 10 und die Fluidabfuhr aus dem Filtergehäuse 10 absperren, was das Öffnen des Filtergehäuses 10 und den Austausch eines verbrauchten Filterelementes 16 gegen ein Neuelement 16 deutlich erleichtert, da nicht mit ständig nachströmendem drucklosen Fluid in Form von Unfiltrat bzw. Luft und/oder Filtrat gerechnet werden muss.

Nachdem die Absperreinrichtung 18 mit ihrem Begrenzungselement 84 an dem Anschlag in Form der zweiten Stufe 96 angelangt ist und so einen Rückhalt erfährt, werden, bei fortwährender Drehung des Filterelements 16 in die Abschraub-Richtung, in einem zweiten Schritt die Gewinde 52, 54 der ersten Verbindungseinrichtung 50 genauso wie die Gewinde 112 zwischen Zylindergehäuseteil 24 und Gehäusedeckel 28 vollständig außer Eingriff gebracht.

Bei einem Abnehmen des Gehäusedeckels 28 von dem Zylindergehäuseteil 24 nimmt der Gehäusedeckel 28 aufgrund der bestehenden Rastverbindung zwischen den Steuernocken 190 des Gehäusedeckels 28 und der Raste 180 der zweiten Endkappe 58 das Filterelement 16 mit, die als Einheit aus dem Filtergehäuse 10 entfernt werden.

Soll nun das oder ein anderes Filterelement 16 in die Filtervorrichtung eingesetzt werden, wird der auf das Zylindergehäuseteil 24 gesetzte und mit dem in den Filtergehäusekopf 22 eingeführten Filterelement 16 rastend verbundene Filtergehäusedeckel 28 mittels der Ansteuereinrichtung 20 in eine Aufschraub-Richtung um die Längsachse 30 der Filtervorrichtung gedreht. Dabei gelangen die Anlageschrägen 194 der Steuernocken 190 des Gehäusedeckels 28 in Anlage mit den Führungsschrägen 188 der Vorsprünge 184 der zweiten Elementkappe 58.

Bei diesem anfänglichen in Eingriff bringen des Innengewindes 112 des Gehäusedeckels 28 mit dem Außengewinde 112 des Zylindergehäuseteils 24 können die Steuernocken 190 des Gehäusedeckels 28 die Vorsprünge 184 der zweiten Elementkappe 58 passieren, ohne das Filterelement 16 mitzunehmen, weil das Filterelement 16 in dem Filtergehäuse 10 ein Spiel in Axialrichtung hat, so dass die zweite Verbindungseinrichtung 166 noch nicht vorgespannt ist. Mit zunehmendem in Eingriff bringen des Innengewindes 112 des Gehäusedeckels 28 mit dem Außengewinde 112 des Zylindergehäuseteils 24 wird nach einem in Anlage geraten des Außengewindes 54 der ersten Endkappe 56 mit dem Innengewinde 52 der Absperreinrichtung 18 die federelastische zweite Verbindungseinrichtung 166 vorgespannt. Bei einer entsprechenden Vorspannung der zweiten Verbindungseinrichtung 166 wird ein Überfahren der Steuernocken 190 des Gehäusedeckels 28 über die Vorsprünge 184 der zweiten Elementkappe 58 verhindert, so dass der Gehäusedeckel 28, mit den Anlageschrägen 194 der Steuernocken 190 an den Führungsschrägen 188 der Vorsprünge 184 der zweiten Elementkappe 58 anliegend, das gesamte Filterelement 16 über seine zweite Endkappe 58 in Aufschraub-Richtung in Drehung versetzt.

Aufgrund der unterschiedlich ausgebildeten Steigung des Gewindes 52, 54 der ersten Verbindungseinrichtung 50 gegenüber der Steigung der Gewindestrecke 112 zwischen Zylindergehäuseteil 24 und Gehäusedeckel 28 werden bei einem Aufschrauben des Gehäusedeckels 28 einerseits die Gewinde 52, 54 der ersten Verbindungseinrichtung 50 miteinander in Eingriff gebracht und gleichzeitig die zweite Verbindungseinrichtung 166 festgelegt. Dadurch sind Filterelemente 16 verschiedener axialer Längen im Rahmen eines Spielausgleiches in dem Filtergehäuse 10 verwendbar und es wird die axiale Bewegung des Filterelementes 16 gegenüber dem Zylindergehäusekopf 22 und -teil 24 während des Ein- und Ausschraubvorgangs ausgeglichen.

Erst wenn das Innengewinde 112 des Gehäusedeckels 28 mit dem Außengewinde 112 des Zylindergehäuseteils 24 vollständig in Eingriff ist, wird die Absperreinrichtung 18 von dem Filterelement 16, ausgehend von ihrer Sperrstellung in ihre Öffnungsstellung mitgedreht und damit die Funktion des Filters hergestellt.

## Patentansprüche

1. Filtervorrichtung mit einem Filtergehäuse (10), das mindestens zwei Anschlussstellen (12, 14), wie einen Zulauf für Unfiltrat und einen Ablauf für Filtrat, aufweist sowie ein tauschbares Filterelement (16) aufnimmt, wobei mittels einer Absperreinrichtung (18) eine in einer Öffnungsstellung vorhandene fluidführende Verbindung zwischen Zu-(12) und Ablauf (14) in einer Sperrstellung abgesperrt ist und wobei mittels einer Ansteuereinrichtung (20) die Absperreinrichtung (18) in diese einzelnen Stellungen bringbar ist,
**dadurch gekennzeichnet,**
**dass** die Absperreinrichtung (18) eine zur Längsausrichtung des Filtergehäuses (10) gesehen schräg gestellte Trennwand (34) aufweist, die in der Öffnungsstellung mit ihrer Oberseite in die eine Anschlussstelle (14) und mit ihrer Unterseite in die jeweils andere Anschlussstelle (12) ausmündet; und
**dass** die Trennwand (34) mittels der Ansteuereinrichtung (20) in die Sperrstellung gebracht, mittels mindestens eines Sperrelementes (66, 68) zumindest den Zulauf sperrt.

2. Filtervorrichtung nach Anspruch 1, **dadurch gekennzeichnet, dass** die Trennwand (34) mittels der Ansteuereinrichtung (20) in die Sperrstellung durch Verschwenken gebracht, mittels mindestens eines Sperrelementes (66, 68) zumindest den Zulauf sperrt.

3. Filtervorrichtung nach Anspruch 1 oder 2, **dadurch gekennzeichnet, dass** die elliptisch ausgebildete Trennwand (34) entlang ihres Außenumfanges (60) eine Dichteinrichtung (88) aufweist und dass die Trennwand (34) von einer Öffnung (44) durchgriffen ist, die mit dem Inneren (42) des hohlzylindrischen Filterelementes (16) in Fluidverbindung steht.

4. Filtervorrichtung nach Anspruch 3, **dadurch gekennzeichnet, dass** die Öffnung (44) in der Trennwand (34) als Teil einer Verbindungseinrichtung (50) zumindest teilweise von einer Gewindestrecke (52) begrenzt ist, die dem Festlegevorgang des Filterelementes (16) im Filtergehäuse (10) über dessen zugeordnete Gewindestrecke (54) als einem weiteren Teil der Verbindungseinrichtung (50) dient.

5. Filtervorrichtung nach einem der vorstehenden Ansprüche, **dadurch gekennzeichnet, dass** die Trennwand (34) mindestens ein Begrenzungselement (84) aufweist, das mit benachbarten Gehäuseteilen (94, 96) derart zusammenwirkt, dass die Trennwand (34) zwischen der Öffnungs- und der Sperrstellung, vorzugsweise um 90°, mittels der Ansteuereinrichtung (20) verschwenkbar im Filtergehäuse (10) mittels einer Führungseinrichtung (74) geführt ist.

6. Filtervorrichtung nach Anspruch 5, **dadurch gekennzeichnet, dass** die Führungseinrichtung (74) mindestens eine Raste (72), vorzugsweise an der Absperreinrichtung (18), aufweist, die in einer Führungsnut (76), vorzugsweise im Filtergehäuse (10), derart aufgenommen ist, dass die Absperreinrichtung (18) radial drehbar und in axialer Richtung, entlang der Längsausrichtung des Filtergehäuses (10) gesehen, stationär im Filtergehäuse (10) aufgenommen ist.

7. Filtervorrichtung nach einem der vorstehenden Ansprüche, **dadurch gekennzeichnet, dass** die Anschlussstellen (12, 14) mit Zu- und Ablauf, zur Längsausrichtung des Filtergehäuses (10) gesehen, einander diametral gegenüberliegend in mindestens ein- und derselben Ebene verlaufend, im Filtergehäuse (10) angeordnet sind.

8. Filtervorrichtung nach einem der vorstehenden Ansprüche, **dadurch gekennzeichnet, dass** die Ansteuereinrichtung (20) einen Gehäusedeckel (28) aufweist, der, vorzugsweise bodenseitig, am Filtergehäuse (10) in lösbarer Weise angeordnet und mit Steuernocken (190) versehen, eine Endkappe (58) des Filterelementes (16) beim Betätigen derart mitnimmt, dass über das Filterelement (16) und die Verbindungseinrichtung (50) die Absperreinrichtung (18) zwischen der Öffnungs- und der Sperrstellung sowie umgekehrt schwenkbar ist.

9. Filtervorrichtung nach Anspruch 8, **dadurch gekennzeichnet, dass** die eine Endkappe (58) des Filterelementes (16) zwei Kappenteile (132, 134) aufweist, die federelastisch nachgiebig miteinander verbunden sind und dass das eine Kappenteil (132) das Elementmaterial (128) des Filterelementes (16) bodenseitig aufnimmt und dass das andere Kappenteil (134) Vorsprünge (184) mit Führungs-schrägen (188) und Widerlagerflächen (186) aufweist, die mit den Steuernocken (190) am Gehäusedeckel (28) zusammenwirken.

10. Filtervorrichtung nach einem der Ansprüche 4 bis 9, **dadurch gekennzeichnet, dass** der Gehäusedeckel (28) bodenseitig auf das sonstige, topfförmige Filtergehäuse (10) als Teil desselben ein- oder aufschraubbar ist und dass die Gewindesteigung des dahingehenden Verbindungsbereiches (112) weniger steil ist als die in Eingriff miteinander befindlichen Verbindungsgewinde (52, 54) der Verbindungseinrichtung (50) zwischen der Absperreinrichtung (18) und einer benachbart angeordneten Elementkappe (56) des Filterelementes (16).

## Claims

1. Filter device with a filter housing (10) comprising at least two ports (12, 14), such as an inlet for unfiltered medium and an outlet for filtrate, and receiving a replaceable filter element (16), wherein a fluid-conveying connection present in an open position between the inlet (12) and outlet (14) is blocked in a closed position by means of a shut-off device (18) and wherein the shut-off device (18) can be moved into these individual positions by means of an actuating device (20),
**characterised in that**
the shut-off device (18) comprises a partition wall (34) positioned obliquely with respect to the longitudinal orientation of the filter housing (10), the top side of said partition wall opening, in the open position, into one port (14) and the bottom side of said partition wall opening into the other port (12) in each case; and
the partition wall (34), when moved into the closed position by means of the actuating device (20), blocks at least the inlet by means of at least one shut-off element (66, 68).

2. Filter device according to claim 1, **characterised in that** the partition wall (34), when moved into the closed position by swivelling by means of the actuating device (20), blocks at least the inlet by means of at least one shut-off element (66, 68).

3. Filter device according to either claim 1 or claim 2, **characterised in that** the elliptically shaped partition wall (34) comprises a sealing device (88) along its outer circumference (60) and **in that** the partition wall (34) is penetrated by an opening (44), which is fluidically connected to the inside (42) of the hollow-cylindrical filter element (16).

4. Filter device according to claim 3, **characterised in that** the opening (44) in the partition wall (34), as part of a connecting device (50), is at least partially delimited by a threaded section (52), which is used to fix the filter element (16) in the filter housing (10) via its associated threaded section (54) as a further part of the connecting device (50).

5. Filter device according to any of the preceding claims, **characterised in that** the partition wall (34) comprises at least one delimiting element (84), which interacts with adjacent housing parts (94, 96) such that a guide device (74) is used to guide the partition wall (34) between the open position and the closed position, preferably through 90°, in a swivelling manner, by means of the actuating device (20) in the filter housing (10).

6. Filter device according to claim 5, **characterised in that** the guide device (74) comprises at least one latch (72), preferably on the shut-off device (18), said latch (72) being received in a guide groove (76), preferably in the filter housing (10), such that the shut-off device (18), which can be rotated radially and in the axial direction, viewed along the longitudinal orientation of the filter housing (10), is received in the filter housing (10) in a stationary manner.

7. Filter device according to any of the preceding claims, **characterised in that** the inlets and outlets of the ports (12, 14) are arranged, as viewed in the longitudinal orientation of the filter housing (10), diametrically opposite one another in the filter housing (10), extending in at least one and the same plane.

8. Filter device according to any of the preceding claims, **characterised in that** the actuating device (20) comprises a housing cover (28), which is arranged, preferably at the bottom, on the filter housing (10) in a detachable manner and is provided with control cams (190) and, when actuated, entrains an end cap (58) of the filter element (16) in such a way that the shut-off device (18) can be swivelled between the open position and the closed position and vice versa via the filter element (16) and the connecting device (50).

9. Filter device according to claim 8, **characterised in that** one end cap (58) of the filter element (16) comprises two cap parts (132, 134) which are connected to one another in a resiliently yielding manner, and **in that** one cap part (132) receives the element material (128) of the filter element (16) at the bottom, and **in that** the other cap part (134) comprises projections (184) with guide bevels (188) and abutment surfaces (186), which interact with the control cams (190) on the housing cover (28).

10. Filter device according to any of claims 4 to 9, **characterised in that** the housing cover (28) can be screwed into or onto the bottom end of the remaining, cup-shaped filter housing (10) as a part thereof, and **in that** the thread pitch of the corresponding connecting region (112) is not as steep as the connecting threads (52, 54) of the connecting device (50) that engage with one another between the shut-off device (18) and an adjacently arranged element cap (56) of the filter element (16).

## Revendications

1. Installation de filtration comprenant une enveloppe (10) de filtre, qui a au moins deux points (12, 14) de raccordement, comme une arrivée pour du non filtrat et une évacuation pour du filtrat, ainsi qu'elle reçoit un élément (16) de filtre remplaçable, dans laquelle, au moyen d'un dispositif (18) d'arrêt, une liaison fluidique, présente dans une position d'ouverture, entre l'arrivée (12) et l'évacuation (14) est arrêtée dans une position d'arrêt et dans laquelle, au moyen d'un dispositif (20) de commande, le dispositif (18) d'arrêt peut être mis dans ces diverses positions,
**caractérisée**
**en ce que** le dispositif (18) d'arrêt a une cloison (34), mise de manière inclinée, considéré par rapport à la direction longitudinale de l'enveloppe (10) du filtre, qui débouche dans la position d'ouverture par son côté supérieur dans le un point (14) de raccordement et par son côté inférieur dans le respectivement autre point (12) de raccordement ; et
**en ce que** la cloison (34), mise dans la position d'arrêt au moyen du dispositif (20) de commande, arrête au moins l'arrivée au moyen d'au moins un élément (66, 68) d'arrêt.

2. Installation de filtration suivant la revendication 1, **caractérisée en ce que** la cloison (34), mise par pivotement au moyen du dispositif (20) de commande dans la position d'arrêt, arrête au moins l'arrivée au moyen d'au moins un élément (66, 68) d'arrêt.

3. Installation de filtration suivant la revendication 1 ou 2, **caractérisée en ce que** la cloison (34) de constitution elliptique a, le long de son pourtour (60) extérieur, un dispositif (88) d'étanchéité et **en ce que** la cloison (34) est traversée par une ouverture (44), qui est en liaison fluidique avec l'intérieur (42) de l'élément (16) de filtre cylindrique creux.

4. Installation de filtration suivant la revendication 3, **caractérisée en ce que** l'ouverture (44) de la cloison (34) est, en tant que partie d'un dispositif (50) de liaison, délimitée au moins en partie par une section (52) filetée, qui sert, comme autre partie du dispositif (50) de liaison, à l'opération de fixation de l'élément (16) de filtre dans l'enveloppe (10) de filtre par sa section (54) filetée associée.

5. Installation de filtration suivant l'une des revendications précédentes, **caractérisée en ce que** la cloison (34) a au moins un élément (84) de limitation, qui coopère avec des parties (94, 96) voisines de l'enveloppe, de manière à guider, au moyen d'un dispositif (74) de guidage dans l'enveloppe (10) de filtre, la cloison (34) entre la position d'ouverture et la position d'arrêt avec possibilité de pivoter au moyen du dispositif (20) de commande, de préférence de 90°.

6. Installation de filtration suivant la revendication 5, **caractérisée en ce que** le dispositif (74) de guidage a au moins un cliquet (72), de préférence sur le dispositif (18) d'arrêt, qui est reçu dans une rainure (76) de guidage, de préférence dans l'enveloppe (10) de filtre, de manière à recevoir, dans l'enveloppe (10) de filtre, le dispositif (18) d'arrêt, de manière à ce qu'il puisse tourner radialement et de manière fixe dans la direction axiale, considéré suivant la direction longitudinale de l'enveloppe (10) de filtre.

7. Installation de filtration suivant l'une des revendications précédentes, **caractérisée en ce que** les points (12, 14) de raccordement ayant l'arrivée et l'évacuation sont disposés dans l'enveloppe (10) de filtre, en s'étendant dans au moins un seul et même plan, en étant opposés diamétralement l'un à l'autre, considéré par rapport à la direction longitudinale de l'enveloppe (10) de filtre.

8. Installation de filtration suivant l'une des revendications précédentes, **caractérisée en ce que** le dispositif (20) de commande a un couvercle (28) d'enveloppe, qui est monté de manière amovible, de préférence du côté du fond sur l'enveloppe (10) de filtre et qui est pourvu de cames (190) de commande, entraîne une coiffe (58) d'extrémité de l'élément (16) de filtre lors de l'actionnement, de manière à ce que, par l'élément (16) de filtre et le dispositif (50) de liaison, le dispositif (18) d'arrêt puisse basculer entre la position d'ouverture et la position d'arrêt, ainsi qu'inversement.

9. Installation de filtration suivant la revendication 8, **caractérisée en ce que** la une coiffe (58) d'extrémité de l'élément (16) de filtre a deux parties (132, 134) de coiffe, qui sont reliées entre elles, en cédant avec l'élasticité d'un ressort, et **en ce que** l'une des parties (132) de coiffe reçoit, du côté du fond, la matière (128) de l'élément (16) de filtre et **en ce que** l'autre partie (134) de coiffe à des saillies (184) ayant des biseaux (188) de guidage et des surfaces (186) de pied droit, qui coopèrent avec les cames (190) de commande du couvercle (28) de l'enveloppe.

10. Installation de filtration suivant l'une des revendications 4 à 9, **caractérisée en ce que** le couvercle (28) de l'enveloppe peut, du côté du fond, être vissé ou dévissé sur le reste de l'enveloppe (10) de filtre en forme de pot, comme partie de celle-ci et **en ce que** le pas du filetage de la partie (112) de liaison concerné est moins raide que les filetages (52, 54) de liaison, engrenant l'un avec l'autre, du dispositif (50) de liaison entre le dispositif (18) d'arrêt et une coiffe (56) de l'élément (16) de filtre, qui est voisine.
